# EUROPEAN PATENT SPECIFICATION

(11) **EP 0 948 120 B1**
(45) Date of publication and mention of the grant of the patent: **31.07.2002**
(21) Application number: 99106571.5
(22) Date of filing: 31.03.1999
(51) Int. Cl.: H02K 49/04

(54) **Eddy current reduction apparatus**
Wirbelstrom Bremsgerät
Ralentisseur à courant de Foucault

(30) Priority: 31.03.1998 JP 10584698
(43) Date of publication of application: 06.10.1999
(73) Proprietor: ISUZU MOTORS LIMITED, Shinagawa-ku, Tokyo (JP)
(72) Inventor: Kobayashi, Shin, 8 Tuchidana, Fujisawa-shi, Kanagawa (JP); Narumi, Yukitoshi, c/o Isuzu Motors Ltd., Kawasaki-shi, Kanagawa (JP)
(74) Representative: Niedmers, Ole, Dipl.-Phys.

(56) References cited:
- EP-A- 0 762 620
- EP-A- 0 777 316
- GB-A- 1 275 114

## Description

The present invention relates to an eddy current reduction apparatus, comprising an immovable magnet supporting tube and a movable magnet supporting tube aligned in an axial direction are disposed coaxial with a brake drum, a number of permanent magnets are supported at peripherally equal intervals on the outer peripheral wall of each magnet supporting tube, so that two adjacent magnets are located at a predetermined pitch, wherein the permanent magnets are disposed with this magnetic poles directed in a peripheral direction of a ferromagnetic member is attached to each magnetic pole, said eddy current reduction apparatus providing actuators for reversibly rotation said movable magnet supporting tube.

In the GB-A-1 275 117 there is disclosed an eddy current reduction apparatus comprising an immovable magnet supporting tube in form of a magnet wheel and a movable magnet supporting tube in form of a further magnet wheel aligned in an axial direction and disposed coaxial with braking disks. Permanent magnet are supported on the outer periphery of the magnet supporting tubes. Approximate surfaces of a pair of ferromagnetic members are coupled to both peripheral ends of each permanent magnet and extreme surfaces are opposed to the braking disks. An actuator is provided to reversibly rotating the movable magnet supporting tube.

An eddy current reduction apparatus with a braking drum and a magnet supporting tubes are also disclosed in the EP-A-0 762 620.

In a magnet type eddy current reduction apparatus disclosed in Japanese Patent Publication No. 3-86,050 Publication or the like, a magnet supporting tube is reciprocated in an axial direction to thereby carry out switching between braking and nonbraking. This has a difficulty in that an axial dimension becomes long by a moving space portion of the magnet supporting tube.

In a magnet type eddy current reduction apparatus disclosed in Japanese Patent Publication No. 7-118,901 Publication or the like, when a movable magnet supporting tube is rotated during braking, and a polarity of a magnet of the movable magnet supporting tube is made the same as that of a magnet of an immovable magnet supporting tube, a magnetic circuit is formed which comprises a magnet - a ferromagnetic plate (a pole piece) - a brake drum - a ferromagnetic plate - a magnet - a magnet supporting tube - a magnet. When the rotating brake drum crosses the magnetic flux from the magnet of the magnet supporting tube, a braking force based on an eddy current is generated in the brake drum.

In the aforementioned each eddy current reduction apparatus, however, N-pole and S-pole of the magnet are directed in a diametral direction of the brake drum. It is therefore necessary to process an outer surface and an inner surface of the magnet into a cylindrical or circular surface so that an effective magnetic flux from the magnet enters the brake drum via the ferromagnetic plate, it makes the processing cost considerably increasing. Further, the ferromagnetic plate becomes so large as to cover the magnet in order to introduce the magnetic flux from the magnet into the brake drum without any leakage, so that the magnetic flux density cannot be effectively increased due to the ferromagnetic plate, failing to fully generate the braking force. In view of the foregoing, it is an object of the present invention to provide an eddy current reduction apparatus which is small in shape of the entirety, and in which an effective magnetic circuit is formed relative to a break drum by a combination of a block (such as a rectangular parallelepiped) shape magnet and a ferromagnetic member.

For solving the problem noted above, the constitution of the present invention is characterised in that the eddy current reduction apparatus is located within a brake drum coupled to a rotational shaft, radial end surfaces of the ferromagnetic members are opposed to an inner peripheral surface of the brake drum, and between the braking position and the non-making position the movable magnet supporting tube is rotated by half of said pitch and in the braking position the ferromagnetic members on the movable supporting tube and the ferromagnetic members of the unmovable supporting tube are axially aligned.

The present invention has the construction in which the magnet is supported on the magnet supporting tube so that the magnetic poles on both ends are directed in a peripheral direction, and the ferromagnetic members (a pole piece) extending in a peripheral direction and in a diametral outward direction are coupled to the magnetic pole surfaces on both ends of the magnet. The outer peripheral surfaces of the immovable magnet supporting tube and the movable magnet supporting tube arranged in an axial direction are covered by an extremely thin outer tube portion formed of a non-magnetic material and protected from dust and muddy water.

At the time of braking, the magnets of the movable magnet supporting tube and immovable magnet supporting tube are lined up in the axial direction, and the magnetic flux enters the brake drum from each magnet. When the rotating brake drum crosses the magnetic flux from the each magnet of the magnet supporting tube, the braking force based on the eddy current is generated in the brake drum. At the time of non-braking, when the movable magnet supporting tube is peripherally deviated by half of a pitch relative to the immovable magnet supporting tube, a short-circuiting magnetic circuit around the magnet supporting tubes is formed between the magnets of both the magnet supporting tubes and the ferromagnetic member, the magnets do not to exert the magnetic flux on the brake drum so that the braking force is not generated.

### BRIEF DESCRIPTION OF THE DRAWINGS

These and other objects and features of the invention will become more apparent upon a perusal of the following description taken in conjunction with the accompanying drawings wherein:
FIG. 1 is a front sectional view of an eddy current reduction apparatus according to the present invention.
FIG. 2 is a front sectional view showing main parts of the eddy current reduction apparatus.
FIG. 3 is a side sectional view showing the braking state of the eddy current reduction apparatus.
FIG. 4 is a side sectional view showing the non-braking state of the eddy current reduction apparatus.
FIG. 5 is a front sectional view showing main parts of an eddy current reduction apparatus according to a modification of the present invention.
FIG. 6 is a perspective view of a magnet support tube of the eddy current reduction apparatus.

### DESCRIPTION OF THE PREFERRED EMBODIMENTS

In the eddy current reduction apparatus, a brake drum 13 is coupled to a rotational shaft 4. To accomplish this, a mounting flange 5 having a spline hole 5a is fitted in the output rotational shaft 4 which is supported by a bearing 3 on the end wall of a gear box 2 of a speed change gear and projects from the end wall, and is fastened by means of a nut 6 to prevent it from being slipped out. The end wall of a brake drum 7 of a parking brake and a flange portion 9a integral with a wheel 9 for supporting the brake drum 13 of the eddy current reduction apparatus are superposed to the mounting flange 5 and fastened by means of a plurality of bolts 10 and nuts 10a.

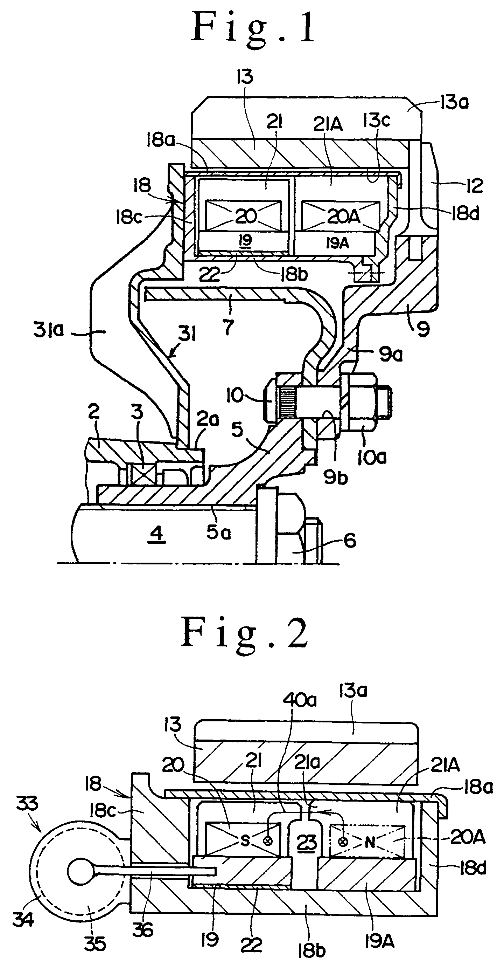

The brake drum 13 is formed of a material having a large permeability such as iron, and a number of cooling fins 13a are provided on the outer peripheral wall thereof at peripherally equal intervals. As will be mentioned later, the proximal end of the brake drum 13 is coupled to a number of supporting arms (spokes) 12 fitted in the wheel 9 and extending in a radial direction from the wheel 9. Interiorily of the brake drum 13 is coaxially disposed a guide tube 18 having a hollow portion 23 (FIG. 2) in the form of a box in section. The immovable guide tube 18 formed of a non-magnetic material such as aluminum is secured by means of bolts, not shown, to a frame plate 31 outer-fitted and secured to a projecting wall 2a of a gear box 2. The guide tube 18 is constituted such that annular end wall plates 18c, 18d are coupled to both ends of an outer tube portion 18a and an inner tube portion 18b. In the illustrated embodiment, the end wall plate 18c and the inner tube portion 18b are integrally constituted as a tube body having an inverted L shape in section, and the end wall plate 18d is coupled to the tube body by means of bolts, the outer tube portion 18a being formed from a non-magnetic material such as a thin stainless steel plate.

A movable magnet support tube 19 and an immovable magnet support tube 19A arranged in an axial direction are stored in the hollow portion 23 of the guide tube 18. The magnet support tube 19 is supported reversibly rotatably on the inner tube portion 18b by means of a bearing 22, and the magnet support tube 19A is coupled to the inner tube portion 18b. A number of magnets 20, 20A are supported at peripherally equal intervals on the outer peripheral walls of the magnet support tubes 19, 19A, respectively.

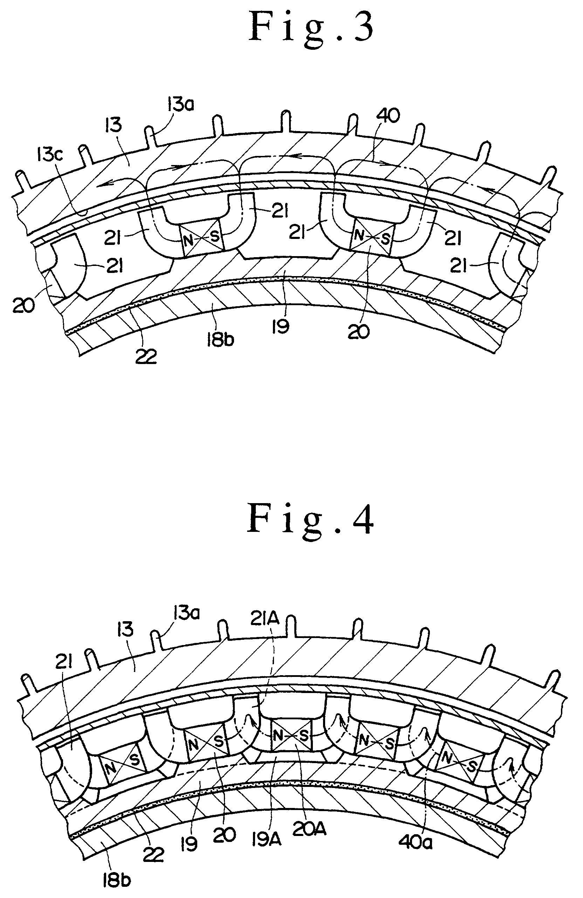

As shown in FIG. 3, the magnets 20 of the magnet support tube 19 are arranged so that N-poles are directed counterclockwise, for example. The proximal end surfaces of circular ferromagnetic members (pole pieces) 21, 21A are coupled to the magnetic pole surfaces at both peripheral ends of the magnets 20, 20A. The ferromagnetic members 21, 21A are curved outward in a diametral direction between the extreme end surface opposed to the inner peripheral surface 13c of the brake drum 13. The magnet 20 and a pair of ferromagnetic members 21 are substantially in the form of a horse-shoe. In the illustrated embodiment, the width of the ferromagnetic members 21, 21A (axial dimension of the brake drum 13) is somewhat wider than that of the magnets 20, 20A, and the width of the extreme ends of the ferromagnetic members 21, 21A is further widened. Preferably, axial projections 21a are formed at the extreme ends of the ferromagnetic members 21, 21A so that they are close to each other, as shown in FIG. 2.

A plurality of actuators 33 (FIG. 2) are supported at peripherally equal intervals on a frame plate 31 (FIG. 1) having a reinforcing rib 31a. In the actuator 33, a piston 35 is fitted in a cylinder 34 to define a pair of fluid pressure chambers, and an arm 36 which projects toward the hollow portion 23 via a slit of the guide tube 18 from a piston rod is connected to the movable magnet support tube 19.

As shown in FIG. 3, at the time of braking, the magnets 20 of the magnet support tube 19 are axially lined up with the magnets 20A of the magnet support tube 19A. When the rotating brake drum 13 crosses the magnetic flux which exerts on the inner peripheral surface 13c of the brake drum 13 via the ferromagnetic members 21, 21A from the magnets 20, 20A, an eddy current is generated in the brake drum 13, and a brake torque is generated in the brake drum 13. At that time, a magnetic circuit 40 is formed between the magnets 20, 20A and the brake drum 13, as shown in FIG. 3.

At the time of non-braking, when the magnet support tube 19 is rotated by half of a pitch of the magnets 20, the state shown in FIG. 4 results so that the magnets 20, 20A exert no magnetic flux on the brake drum 13, and the brake torque is not generated in the brake drum 13. That is, as shown in FIGS. 2 and 4, the ferromagnetic members 21 extending from the S-pole of the magnets 20 arrange parallel to the ferromagnetic members 21A extending from the N-pole of the magnets 20A, and the ferromagnetic members 21 extending from the N-pole of the magnets 20 arrange parallel to the ferromagnetic members 21A extending from the S-pole of the magnets 20A. At that time, a short-circuiting magnetic circuit 40a is formed which comprises N-pole of magnet 20 - ferromagnetic member 21, ferromagnetic member 21A, S-pole of magnet 20A - N-pole of magnet 20A - ferromagnetic member 21A - ferromagnetic member 21 - S-pole of magnet 20, ... .

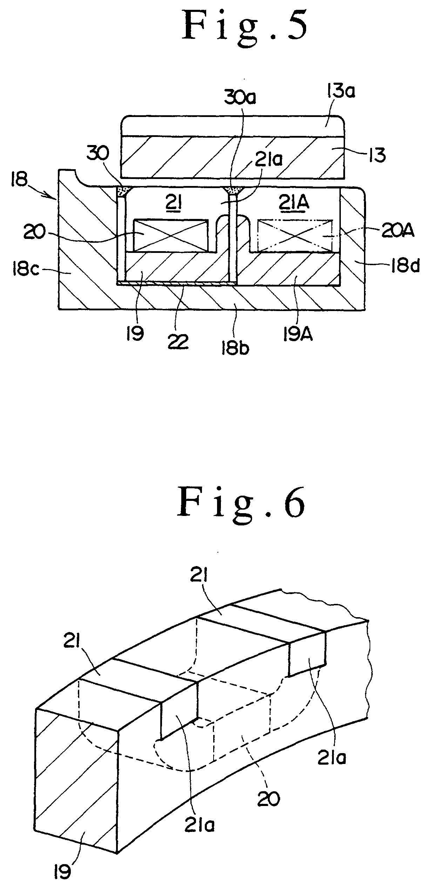

In the embodiments shown in FIGS. 5 and 6, the movable magnet support tube 19, the magnets 20, and the ferromagnetic members 21 are integrated by casting them into a non-magnetic material such as aluminum to obtain a tube body having a rectangular section. Similarly, the immovable magnet support tube 19A also may be integrated with the magnets 20A, the ferromagnetic members 21A, and the end wall plate 18d of the guide tube 18. Further, the outer tube portion 18a is removed, and an annular seal member 30 is interposed between the end wall plate 18c of the guide tube 18 and the movable magnet support tube 19, and a seal member 30a is interposed between the movable magnet support tube 19 and the immovable magnet support tube 19A, to prevent dust and muddy water from entering, thus securing the smooth movement of the movable magnet support tube 19. However, the outer tube portion 18a formed from a non-magnetic thin sheet may be coupled to the guide tube 18 to prevent dust and muddy water from entering, similar to the embodiments shown in FIGS. 1 to 4.

Obviously, many modifications and variations of the present invention are possible in right of the above teachings. It is to be understood, therefore, that the invention can be practiced otherwise than as specifically described.

As described above, the present invention provides an arrangement wherein within a brake drum coupled to a rotational shaft, an immovable magnet supporting tube and a movable magnet supporting tube aligned in an axial direction are disposed coaxial with said brake drum, a number of permanent magnets are supported at peripherally equal intervals on an outer peripheral wall of each magnet supporting tube, proximal surfaces of a pair of ferromagnetic members are coupled to magnetic pole surfaces of both ends being in a peripheral direction of each of said permanent magnets, and extreme end surfaces of said ferromagnetic embers are opposed to an inner peripheral surface of said brake drum, and said eddy current reduction apparatus providing actuators for reversibly rotating said movable magnet supporting tube. For performing switching between braking and non-braking, the magnet support tube is reciprocated not in an axial direction but in a peripheral direction to thereby shorten the axial dimension to miniaturize the entire apparatus.

A substantially horse-shoe shaped combination in which bended ferromagnetic members are coupled to both ends of block-like magnets is supported on the outer peripheral wall of the magnet 1support tubes to store the magnet support tubes in a hollow portion of a guide tube. Therefore, the constitution of the magnets and the magnet support tubes is simpler than that of the conventional eddy current reduction apparatus, and the magnet support tubes are reduced in weight.

Since a combination of block-like magnet and ferromagnetic members is in the form of substantially a horse-shoe, the magnetic flux less leaks, an effective magnetic circuit are formed relative to the brake drum, and a great braking force is obtained.
- 2:: gear box
- 2a:: projecting wall
- 3:: bearing
- 4:: rotational shaft
- 5:: mounting flange
- 5a:: spline hole
- 6:: nut
- 7:: brake drum
- 9:: wheel
- 9a:: flange portion
- 10:: bolt
- 10a:: nut
- 12:: support arm
- 13:: brake drum
- 13a:: cooling fin
- 13c:: inner peripheral surface
- 18:: guide tube
- 18a:: outer tube portion
- 18b:: inner tube portion
- 18c:: end wall plate
- 18d:: end wall plate
- 19:: magnet support tube
- 19A:: magnet support tube
- 20:: permanent magnet
- 21:: ferromagnetic member
- 21A:: ferromagnetic member
- 21a:: projection
- 22:: bearing
- 23:: hollow portion
- 30:: seal member
- 30a:: seal member
- 31:: frame plate
- 31a:: reinforcing rib
- 33:: actuator
- 34:: cylinder
- 35:: piston
- 36:: arm
- 40:: magnetic circuit
- 40a:: short-circuiting magnet circuit

## Claims

1. An eddy current reduction apparatus, comprising an immovable magnet supporting tube (19) and a movable magnet supporting tube (19A) aligned in an axial direction are disposed coaxial with a brake drum, a number of permanent magnets (20) are supported at peripherally equal intervals on an outer peripheral wall of each magnet supporting tube (19), so that two adjacent magnets (20) are located at a predetermined pitch, wherein the permanent magnets are disposed with their magnetic poles directed in a peripheral direction and a ferromagnetic member is attached to each magnetic pole, said eddy current reduction apparatus providing actuators for reversibly rotating said movable magnet supporting tube, **characterised in that** the eddy current reduction apparatus is located within a brake drum (13) coupled to a rotational shaft (4), radial end surfaces of the ferromagnetic members are opposed to an inner peripheral surface of the brake drum, and between the braking position and the non-braking position the movable magnet supporting tube (19A) is rotated by half of said pitch, and in the braking position the ferromagnetic members on the movable supporting tube and the ferromagnetic members on the unmovable supporting tube (19A) are axially aligned.

2. The eddy current reduction apparatus according to claim 1, **characterised in that** said immovable magnet supporting tube (19) and said movable magnet supporting tube (19A) are received in an annular hollow portion (23) having a rectangular section of a guide tube (18) formed of a nonmagnetic material.

## Patentansprüche

1. Wirbelstrom-Bremsgerät mit einem feststehenden Magnettragerohr (19) und einem beweglichen Magnettragerohr (19A), die in axialer Richtung miteinander fluchten und koaxial zu einer Bremstrommel angeordnet sind, mit einer Reihe von Dauermagneten (20), die sich in Umfangsrichtung auf einer außen liegenden Umfangswandung jedes Magnettragerohres (19) in gleichmäßigen Abständen so abstützen, daß zwei benachbarte Magnete (20) um einen vorgegebenen Teilungsschritt voneinander beabstandet sind, wobei die Dauermagneten so angeordnet sind, daß ihre Magnetpole in Umfangsrichtung ausgerichtet sind, und bei welchem ein ferromagnetisches Teil an jedem Magnetpol angebracht ist, wobei in dem Wirbelstrom-Bremsgerät Betätigungselemente zum umkehrbaren Drehen des beweglichen Magnetstützrohres vorgesehen sind, **dadurch gekennzeichnet, daß** das Wirbelstrom-Bremsgerät im Inneren eines Bremstrommel (13) angeordnet ist, die mit einer Drehwelle (4) gekoppelt ist, wobei radiale Abschlußflächen der ferromagnetischen Teile einer innen liegenden Umfangsfläche der Bremstrommel gegenüber liegen, und daß zwischen der Bremsstellung und der Bremslösestellung das bewegliche Magnettragerohr (19A) um einen halben Teilungsschritt gedreht wird und in der Bremsstellung die ferromagnetischen Teile auf dem beweglichen Magnettragerohr und die ferromagnetischen Teile auf dem feststehenden Tragerohr (19A) axial miteinander fluchten.

2. Wirbelstrom-Bremsgerät nach Anspruch 1, **dadurch gekennzeichnet, daß** das feststehende Magnettragerohr (19) und das bewegliche Magnettragerohr (19A) in einem ringförmigen hohlen Abschnitt (23) mit rechteckigem Querschnitt eines Führungsrohres (18) aufgenommen sind, welches aus einem nichtmagnetischen Werkstoff gebildet ist.

## Revendications

1. Dispositif ralentisseur à courants de Foucault, comprenant un tube de support d'aimants immobile (19) et un tube de support d'aimants mobile (19A) alignés dans une direction axiale qui sont disposés de façon coaxiale par rapport à un tambour de frein, un certain nombre d'aimants permanents (20) sont supportés à des intervalles égaux suivant la périphérie sur une paroi périphérique extérieure de chaque tube de support d'aimants (19), de sorte que deux aimants adjacents (20) soient situés à un pas prédéterminé, dans lequel les aimants permanents sont disposés avec leurs pôles magnétiques dirigés dans une direction périphérique, et un élément ferromagnétique est fixé à chaque pôle magnétique, ledit dispositif ralentisseur à courants de Foucault prévoyant des actionneurs en vue de faire tourner en sens inverses ledit tube de support d'aimants mobile, **caractérisé en ce que** le dispositif ralentisseur à courants de Foucault est situé à l'intérieur d'un tambour de frein (13) accouplé à un arbre de rotation (4), des surfaces d'extrémités radiales des éléments ferromagnétiques sont opposées à une surface périphérique intérieure du tambour de frein, et, entre la position de freinage et la position d'absence de freinage, le tube de support d'aimants mobile (19A) est tourné de la moitié dudit pas, et, dans la position de freinage, les éléments ferromagnétiques sur le tube de support mobile et les éléments ferromagnétiques sur le tube de support immobile (19A) sont alignés axialement.

2. Dispositif ralentisseur à courants de Foucault selon la revendication 1, **caractérisé en ce que** ledit tube de support d'aimants immobile (19) et ledit tube de support d'aimants mobile (19A) sont reçus dans une partie creuse annulaire (23) présentant une section rectangulaire d'un tube de guidage (18) formé d'un matériau non magnétique.
